# EUROPÄISCHE PATENTANMELDUNG

(11) **EP 0 765 065 A2**
(43) Veröffentlichungstag der Anmeldung: **26.03.1997**
(21) Anmeldenummer: 96114849.1
(22) Anmeldetag: 16.09.1996
(51) Int. Cl.: H04M 3/50, H04M 3/12

(54) **Verfahren für einen Notbetrieb bei Ausfall einer automatischen Anrufverteilung in einem Kommunikationssystem**

(30) Priorität: 25.09.1995 DE 19535545
(71) Anmelder: SIEMENS AKTIENGESELLSCHAFT, 80333 München (DE)
(72) Erfinder: Drobek, Erich, 82008 Unterhaching (DE); Ramberger, Friedrich, 2332 Hannersdorf (AT); Köberl, Johann, 1050 Wien (AT)

(57) **Zusammenfassung**

Ein Notbetrieb für eine Gruppe (G) von Agenten-Kommunikationsendgeräten (AKE) wird nach einem Erkennen eines Ausfalls der für die Gruppe (G) vorgesehenen automatischen Anrufverteilung dadurch bewirkt, daß für die im Normalbetrieb über einen Service-Sammelanschluß (SA) vermittelten ankommenden Anrufe (ar) automatisch eine Anrufumleitung (AUL2) zu einem Agenten-Sammelanschluß (ASA) ohne eine automatische Anrufverteilung eingestellt wird, wobei dem Agenten-Sammelanschluß(ASA) jeweils die gleiche Gruppe (G) von Agenten-Kommunkationsendgeräten (AKE) zugeordnet ist. Durch das erfindungsgemäße Verfahren werden die durch einen Ausfall der automatischen Anrufverteilung verursachten Störungs- und Ausfallzeiten erheblich reduziert.

## Beschreibung

Für eine Steuerung von Leistungsmerkmalen in Kommunikationsnetzen, insbesondere privaten Kommunikationsnetzen ist eine Kopplung der Kommunikationssysteme, insbesondere private Nebenstellenanlagen, mit einer Datenverarbeitungsanlage über eine ACL-Schnittstelle (Applications Connectivity Link) vorgesehen. Gemäß diesem Applications Connectivity Link ist physikalisch das private Kommunikationssystem, beispielsweise das private Kommunikationssystem HICOM 300 der Firma Siemens, über eine V.24-Schnittstelle oder alternativ über eine ISDN-Basisschnittstelle (S0) mit der Datenverarbeitungsanlage verbunden. Diese ACL-Schnittstelle ist vorzugsweise in einer Betriebstechnikeinheit - beim Kommunikationssystem HICOM 300 ein integrierter Betriebstechnikserver - eines Kommunikationssystems realisiert und steuert den Kommunikationsaustausch gemäß einem definierten Protokoll - z.B. MSV1 - mit definierten Meldungen. Die in diese Meldungen eingebetteten Informationen entsprechen den vermittlungstechnischen Anweisungen und Ereignismeldungen des Kommunikationssystems. Als Bindeglied zwischen der Datenverarbeitungsanlage und dem Kommunikationssystem ist in diesem eine zur Ausführung der vermittlungstechnischen Anweisungen und zum Generieren der vermittlungstechnischen Ereignismeldungen geeignete Programmstruktur vorgesehen, wobei durch die vermittlungstechnischen Anweisungen die Verbindungssteuerung beeinflußt und durch die vermittlungstechnischen Ereignismeldungen der aktuelle vermittlungstechnische Zustand von Verbindungen angezeigt wird.

Mit Hilfe eines derart DVA-gesteuerten Kommunikationssystems sind komplexe Umkopplungen von Verbindungen, z.B. von und zu Voice-Mail-Servern, Auslösen und Überwachungen von Verbindungen, zusätzliche LED-Steuerungen von Endgeräten und auch das Leistungsmerkmal "automatische Anrufverteilung", in der Fachwelt als ACD - Automatic Call Distribution - realisierbar. Mit Hilfe des Leistungsmerkmals "automatische Anrufverteilung" können ankommende insbesondere externe aber auch interne Anrufe aufgrund der im Kommunikationssystem gebildeten und übermittelten vermittlungstechnischen Ereignismeldungen von der Datenverarbeitungsanlage, die einen ACD-Server realisiert, bewertet und zu vorbestimmten Agenten-Kommunikationsendgeräten bzw. Teilnehmern umgekoppelt werden. Im Rahmen dieser Bewertung bzw. Umkopplung von Anrufen können diese identifiziert, können bestimmten Anrufe bestimmte Kommunikationsendgerate bzw. Teilnehmer zugeordnet und können Anrufe gezielt zu freien, nicht belegten Agenten-Kommunikationsendgeräten umgekoppelt werden.

Für die automatische Anrufverteilung ist im privaten Kommunikationssystem für jeden für eine automatische Anrufverteilung und für einen Anschluß eines Service-Kommunikationsendgerätes vorgesehenen Serviceendgeräteport eine Anrufumleitung zu einem mit einem Anrufordner versehenen Service-Sammelanschluß eingestellt. Über diesen Service-Sammelanschluß wird ein ankommender Anruf mit Hilfe der automatischen Anrufverteilung an ein an das Kommunikationssystem angeschlossenes Agenten-Kommunikationsendgerät vermittelt wird, wobei jedem Service-Sammelanschluß eine Gruppe von Agenten-Kommunikationsendgeräten zugeordnet ist. Die Agenten-Kommunikationsendgeräte sind beispielsweise RufannahmeKommunikationsendgeräte von Firmen, wobei durch die Funktion automatische Anrufverteilung eine effiziente Verteilung der ankommenden Anrufe auf die jeweiligen Rufannahmeplätze, im Besetztfall eine Pufferung des jeweiligen Anrufes in einer Warteschlange einschließlich einer musikalischen Einspielung und bei einer Nichterreichbarkeit einer Umsteuerung auf eine Aufzeichnungseinrichtung bewirkt wird. Das an den Serviceendgeräteport angeschlossene Service-Kommunikationsendgerät ist insbesondere für den Notbetrieb vorgesehen. Durch entsprechende manuelle Tastenbetätigungen wird bei einem Ausfall der Funktion automatische Anrufverteilung eine Anrufumleitung von dem Service-Kommunikationsendgerät zu einem zusätzlichen Sammelanschluß eingestellt, wobei die Zuordnung der Agenten-Kommunikationsendgeräte erhalten bleibt. Diese manuelle Notbetrieb-Einstellung der Anrufumleitung erfordert einen hohen personellen Aufwand und erfolgt nach einem Erkennen des Ausfalls durch eine Bedienperson. Die Erkennungszeit durch eine Bedienperson und damit die Zeit bis zur Notbetrieb-Einstellung der Anrufumleitung auf den zusätzlichen Sammelanschluß ist nicht vorhersehbar und damit bei einer nicht zu vernachlässigenden Anzahl von Störungsfällen zu hoch, die wiederum nicht mehr akzeptierbare Betriebsstörungen verursachen.

Die der Erfindung zugrundeliegende Aufgabe besteht darin, für die Agenten-Kommunikationsendgeräte den Notbetrieb nach einem Ausfall der automatischen Anrufverteilung umgehend einzustellen. Die Aufgabe wird durch die Merkmale des Anspruchs 1 gelöst.

Der wesentliche Aspekt des erfindungsgemäßen Verfahrens ist darin zu sehen, daß mit Hilfe einer Sicherungsroutine für jede Servicenummer automatisch nach dem Erkennen des Ausfalls der automatischen Anrufverteilung eine Anrufumleitung zu einem eingerichteten Agenten-Sammelanschluß eingestellt wird. Nach einer Inbetriebnahme der automatischen Anrufverteilung - insbesondere nach einem vorhergehenden Ausfall - wird vorteilhaft bei einer Inbetriebnahmeroutine die Anrufumleitung zum Agenten-Sammelanschluß automatisch deaktiviert - Anspruch 2. Der wesentliche Vorteil des erfindungsgemäßen Verfahrens ist darin zu sehen, daß sowohl die Erkennung des Ausfalls der automatischen Anrufverteilung als auch die Einstellung der Anrufumleitung zu einem eingerichteten Agenten-Sammelanschluß automatisch ausgeführt wird und somit unter minimalsten zeitlichen Verzögerungen ein Notbetrieb eingestellt wird. Des weiteren kann auf den Anschluß eines Service-Kommunikationsendgerätes am Serviceendgeräteport und auf den Serviceendgeräteport selbst verzichtet werden, da diese für eine Notbetrieb-Einstellung nicht mehr erforderlich sind. Durch das erfindungsgemäße Verfahren, d.h. den automatischen Notbetrieb, kann ein Service-Sammelanschluß mit einem Anrufordner und einer Servicenummer konfiguriert werden, bei dem ankommende Anrufe mit der jeweiligen Servicenummer direkt den Service-Sammelanschluß erreichen, wobei die Anrufumleitung zu dem Service-Sammelanschluß nicht mehr erforderlich ist.

Die im Kommunikationssystem gespeicherte Sicherungsroutine enthält für jede Servicenummer einen Stapel von betriebstechnischen Anweisungen, mit deren Hilfe nach einem Erkennen des Ausfalls der automatischen Anrufverteilung eine Anrufumleitung zum eingerichteten Agenten-Sammelanschluß eingestellt wird - Anspruch 3.

Das erfindungsgemäße Verfahren ist auch in Kommunikationssystemen mit einer automatischen Anrufverteilung einsetzbar, bei dem ein Serviceendgeräteport für den Anschluß eines Service-Kommunikationsendgerätes einschließlich der erforderlichen Anrufumleitung zum Service-Sammelanschluß bestehen bleibt. Hierbei wird nach einem Erkennen eines Ausfalls der automatischen Anrufverteilung in einem Kommunikationssystem mit Hilfe der Sicherungsroutine die Anrufumleitung zum Service-Sammelanschluß deaktiviert und zum Agenten-Sammelanschluß eingestellt - Anspruch 4. Bei einer Inbetriebnahme der automatischen Anrufverteilung - insbesondere nach einem vorhergehenden Ausfall - wird mit Hilfe einer in dieser vorgesehenen Inbetriebnahmeroutine die Anrufumleitung zum Agenten-Sammelanschluß deaktiviert und zum Service-Sammelanschluß eingestellt - Anspruch 5. Für die automatische Dekaktivierung der Anrufumleitung zum Service-Sammelanschluß und die automatische Einstellung der Anrufumleitung zum Agenten-Sammelanschluß umfaßt die Sicherungsroutine für jede Servicenummer einen Stapel von betriebstechnischen Anweisungen - Anspruch 6.

Weitere vorteilhafte Weiterbildungen des erfindungsgemäßen Verfahrens sind den weiteren Ansprüchen zu entnehmen.

Das Blockschaltbild zeigt ein Kommunikationssystem (KS), an das bidirektional wirkende Verbindungsleitungen VL herangeführt sind. Über diese Verbindungsleitungen VL werden ankommende Anrufe ar von weiteren, nicht dargestellten Kommunikationssystemen eines Kommunikationsnetzes übermittelt bzw. werden über diese Verbindungsleitungen VL Verbindungen zu den weiteren Kommunikationssystemen vermittelt.

Des weiteren weist das Kommunikationssystem KS eine ACL-Schnittstelle ACL auf, an die über eine gleichartig realisierte ACL-Schnittstelle ACL ein ACD-Server ACD-S angeschlossen ist. Im Kommunikationssystem KS ist die ACL-Schnittstelle ACL durch eine in einem integrierten Betriebstechnik-Server IPs implementierten ACL-Programmstruktur ACLP realisiert; im ACD-Server ACD-S ist die ACL-Schnittstelle ACL in dessen Steuereinrichtung ST realisiert. Die Abkürzung ACL steht für Applications Connectivity Link und bedeutet, daß über diese ACL-Schnittstellen ACL ein Kommunikationsaustausch für eine applikationsabhängige Verbindungssteuerung über eine Verbindung, d.h. einen Link gesteuert wird. Als applikationsabhängige Verbindungssteuerung ist im ACD-Server ACD-S eine ACD-Programmstrukur ACD vorgesehen. Mit Hilfe dieser ACD-Programmstrukur ACD werden die Funktionen einer bekannten automatischen Anrufverteilung gebildet.

Das Kommunikationssystem (KS) weist für die vermittlungstechnische sowie betriebstechnische Steuerung eine Steuereinrichtung ST auf, die mit einem Koppelfeld KF und dem integrierten Betriebstechnik-Server ISp verbunden ist. In der Steuereinrichtung ST ist neben den nicht dargestellten, wesentlichen vermittlungs- und betriebstechnsichen Programmen eine Programmstruktur DGV für eine Zusammenarbeit mit dem ACD-Server ACD-S und des weiteren eine den Notbetrieb steuernde Sicherungsroutine SIR implementiert.

Im Koppelfeld KF sind mit Hilfe der Steuereinrichtung ST ein Service-Sammelanschluß SA und ein Agenten-Sammelanschluß ASA konfiguriert, d.h. eingerichtet und dem Service-Sammelanschluß SA ein Anrufordner AO zugeordnet. Hierbei ist für den Service-Sammelanschluß SA eine erste Anrufumleitung AUL1 und für den Agenten-Sammelanschluß ASA eine zweite Anrufumleitung AUL2 vorgesehen. Beiden Sammelanschlüssen SA,ASA sind die gleichen Agenten-Kommunikationsendgeräte AKE zugeordnet - durch gestrichelte Linien angedeutet -, wobei diese über nicht dargestellte Teilnehmeranschlußmodule mit dem Koppelfeld KF verbindbar sind. Die einem Service-Sammelanschluß SA zugeordneten Agenten-Kommunikationsendgeräte AKE bilden jeweils eine Gruppe G von Agenten-Kommunikationsendgeräten AKE, an die ein ankommender Anruf ar durch die Servicenummer sr adressiert ist. Für die automatische Anrufverteilung weist das Kommunikationssystem KS des weiteren einen durch ein Teilnehmernanschlußmodul - nicht dargestellt - realisierten Serviceendgeräteport SKE-A auf. An diesen Serviceendgeräteport SKE-A ist ein Service-Kommunikationsendgerät SKE mit einer zugeordneten Servicenummer sr angeschlossen. Für diesen Serviceendgeräteport SKE-A bzw. für das angeschlossene Service-Kommunikationsendgerät SKE ist für den Normalbetrieb die erste Anrufumleitung AUL1 eingestellt. Dies bedeutet, daß ein über eine Verbindungsleitung VL ankommender Anruf ar, der die Servicenummer sr als Zieladresse enthält, durch die für den Serviceendgeräteport SKE-A eingestellte erste Anrufumleitung AUL1 an den Service-Sammelanschluß SA gesteuert bzw. vermittelt und durch den Anrufordner AO gehalten wird. Die Vermittlung wird durch den Anrufordner AO erfaßt und in Form einer Ereignismeldung ei der die automatische Anrufverteilung realisierenden ACD-Programmstruktur ACD gemeldet. In dieser wird dasjenige Agenten-Kommunikationsendgerät AKE ermittelt, an das der ankommende Anruf ar vermittelt werden soll. Die Ermittlung hängt von der jeweils gewählten Applikation ab und kann durch den Anwender durch eine entsprechende Programmierung bestimmt werden. Durch die ACD-Programmstruktur ACD wird eine vermittlungstechnische Anweisung amo gebildet und über die ACL-Schnittstelle ACL zur Programmstruktur DGW übermittelt. Diese bewirkt entsprechend der vermittlungstechnischen Anweisung amo eine Umkopplung bzw. eine Vermittlung des ankommenden Anrufes ar an das ermittelte Agenten-Kommunikationsendgeräte AKE, d.h. eine entsprechende Verbindung wird von der jeweiligen Verbindungsleitung VL zu dem ermittelten Agenten-Kommunikationsendgeräte AKE über das Koppelfeld KF geschaltet - da nicht erfindungswesentlich nicht dargestellt.

Alternativ kann auf den Serviceendgeräteport SKE-A, auf das angeschlossene Service-Kommunikationsendgerät SKE und auf die erste Anrufumleitung AUL1 verzichtet werden - nicht dargestellt-, sofern das erfindungsgemäße Verfahren, mit dem ein automatischer Notbetrieb eingestellt wird, realisiert ist. Hierbei ist jeder Servicenummer sr - repräsentiert einen virtuellen Serviceendgeräteport - ein Service-Sammelanschluß SA mit einem Anrufordner AO direkt zugeordnet, d.h. ankommende Anrufe ar werden direkt an den Service-Sammelanschluß SA vermittelt und dort gehalten. Mit Hilfe des Anrufordners AO und der Programmstruktur DGV für die Verbindungssteuerung werden alle vermittlungstechnsichen Ereignisse im Anrufordner AO erfaßt und durch Ereignismeldungen ei der ACD-Programmstruktur ACD gemeldet. Die weiteren Funktionen entsprechen den vorhergehend bereits erläuterten.

Der Ausfall der Funktion der automatische Anrufverteilung wird der Sicherungsroutine SIR unterschiedlich angezeigt. Kann bei Ausfall der ACD-Programmstruktur ACD diese noch eine Ausfallmeldung am generieren - ist in einer bestimmten Anzahl von Störfällen noch möglich -, wird diese über die ACL-Schnittstelle ACL an die Sicherungsroutine SIR übermittelt und der Ausfall angezeigt. Analog hierzu kann bei bestimmten Ausfällen der ACL-Schnittstelle ACL eine Ausfallmeldung am gebildet und an die Sicherungsroutine SIR übermittelt werden. Eine weitere Variante, den Ausfall der automatischen Anrufverteilung zu erkennen, besteht darin, daß auf Kommunikationsversuche keine Antworten innerhalb bestimmter Zeiträume gegeben werden - von der jeweils verwendeten Übermittlungsprozedur abhängig - und daraufhin ebenfalls eine Ausfallmeldung am an die Sicherungsroutine SIR übermittelt wird. Auch durch weitere Ausfallmeldungen - nicht dargestellt - auf der Betriebssystemebene kann der Ausfall einer der vorhergehend erläuterten Komponenten ACL,ACD der Sicherungsroutine SIR mitgeteilt werden.

Nach dem Erkennen eines Ausfalls der automatischen Anrufverteilung durch die Sicherungsroutine SIR werden die in der Sicherungsroutine SIR für die Servicenummer sr gespeicherten vermittlungstechnsichen Anweisungen amo in Sinne einer Ausführung an die Programmstruktur DGV zur Verbindungssteuerung übermittelt. Mit Hilfe dieser Programmstruktur DGV wird die erste Anrufumleitung AUL1 deaktiviert und die zweite Anrufumleitung AUL2 eingestellt, durch die ankommende Anrufe mit der Servicenummer sr an den Service-Sammelanschluß SA gesteuert bzw. vermittelt werden. Im Blockschaltbild ist dies durch eine strichpunktierte und punktierte Linie angedeutet. Bei der vorhergehend erläuterten Alternative entfällt ein Deaktivieren der ersten Anrufumleitung AUL1, da diese nicht eingerichtet ist. Es wird mit Hilfe der Sicherungsroutine SIR sofort die zweite Anrufumleitung AUL2 aktiviert.

Dem Agenten-Sammelanschluß ASA sind die Agenten-Kommunikationsendgeräte AKE der Gruppe G direkt zugeordnet. Je nach eingestelltem Sammelanschlußtyp werden die ankommenden Anrufe ar direkt an das nächste freie Agenten-Kommunikationsendgeräte AKE, ausgehend von einem ersten Agenten-Kommunikationsendgerät AKE, oder, ausgehend vom zuletzt vermittelten Agenten-Kommunikationsendgeräte AKE an ein nächstes freies Agenten-Kommunikationsendgeräte AKE vermittelt. Dieser Notbetrieb, d.h. ein Bearbeiten der ankommenden Anrufe ar findet nicht statt und die Funktion "automatische Anrufverteilung" ist nicht wirksam, bleibt solange erhalten, bis die automatische Anrufverteilung wieder in Betrieb genommen wird. Bei einer Inbetriebnahme wird die Deaktivierung der zweiten Anrufumleitung AUL2 und die Aktivierung der ersten Anrufumleitung AUL1 für den Serviceendgeräteport SKE-A und bei der Alternative die Deaktivierung der zweiten Anrufumleitung AUL2 durch eine Inbetriebnahmeroutine IBR in der ACD-Programmstruktur ACD gesteuert. Hierzu werden in dieser entsprechende vermittlungstechnischen Anweisungen amo gebildet und über die ACL-Schnittstelle ACL an die Programmstruktur DGV übermittelt, worauf mit deren Hilfe - durch strichpunktierte Linien angedeutet - die erste Anrufumleitung AUL1 für die Servicenummer sr und somit Normalbetrieb eingestellt wird. Bei der Alternative entfällt eine Einstellung der ersten Anrufumleitung AUL1, da ankommende Anrufe ar direkt an den Service-Sammelanschluß SA mit dem Anrufordner AO vermittelt werden.

Das vorhergehend erläuterte Ausführungsbeispiel ist auf eine Servicenummer sr mit einer zugehörigen Gruppe G von Agenten-Kommunikationsendgeräten AKE bezogen. Selbstverständlich sind mehrere derartiger Servicenummer sr mit jeweils einer zugeordneten Gruppe G von Agenten-Kommunikationsendgeräten AKE im Kommunikationssystem KS realisierbar, wobei in der Sicherungsroutine SIR jeweils ein entsprechender Stapel von vermittlungstechnischen Anweisungen amo für die Notbetrieb-Umschaltung von dem jeweiligen Service-Sammelanschluß SA zu dem für den Notbetrieb eingerichteten Agenten-Sammelanschluß ASA vorzusehen ist.

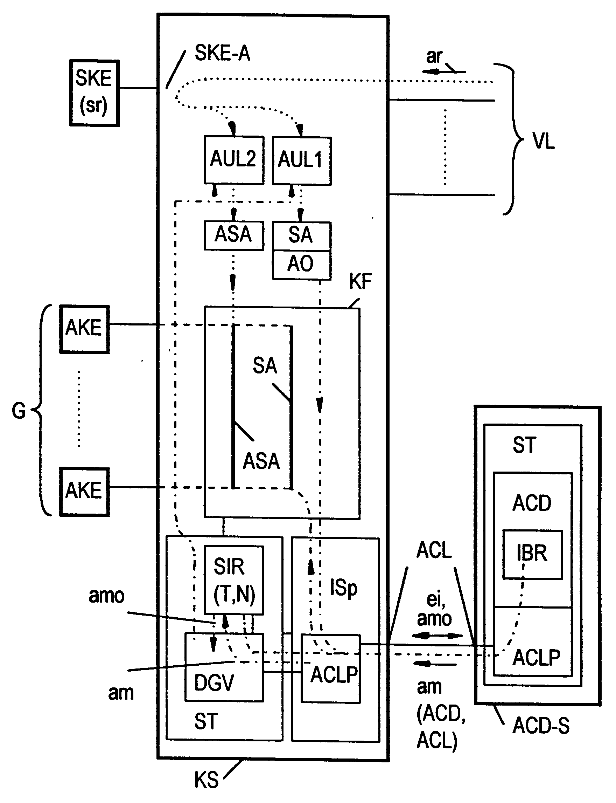

## Patentansprüche

1. Verfahren für einen Notbetrieb bei Ausfall einer automatischen Anrufverteilung in einem Kommunikationssystem (KS),
- bei dem jeder für eine automatische Anrufverteilung vorgesehenen Servicenummer (sr) ein eine Gruppe (G) von an das Kommunikationssystem (KS) angeschlossenen Agenten-Kommunikationsendgeräten (AKE) umfassender Service-Sammelanschluß (SA) mit einem Anrufordner (AO) zugeordnet ist, über den ein ankommender Anruf (ar) mit einer Servicenummer (sr) mit Hilfe der automatischen Anrufverteilung an ein freies Agenten-Kommunikationsendgeräte (AKE) der durch die Servicenummer (sr) bestimmten Gruppe (G) von Agenten-Kommunikationsendgeräten (AKE) vermittelt wird,
- bei dem im Kommunikationssystem (KS) für jede Servicenummer (sr) zusätzlich ein Agenten-Sammelanschluß (ASA) eingerichtet wird, wobei dem Agenten-Sammelanschluß (ASA) die jeweilige Gruppe (G) von Agenten-Kommunikationsendgeräte (AKE) zugeordnet wird, und
- bei dem nach einem Erkennen des Ausfalls der automatischen Anrufverteilung mit Hilfe einer im Kommunikationssystem (KS) vorgesehenen Sicherungsroutine (SIR) für die jeweilige Servicenummer (sr) automatisch eine Anrufumleitung (AUL2) zum zusätzlich eingerichteten Agenten-Sammelanschluß (ASA) eingestellt wird.

2. Verfahren nach Anspruch 1, dadurch **gekennzeichnet,** daß nach einer Inbetriebnahme der automatischen Anrufverteilung mit Hilfe einer in dieser vorgesehenen Inbetriebnahmeroutine (IBR) die Anrufumleitung (AUL2) zum Agenten-Sammelanschluß (ASA) automatisch deaktiviert wird.

3. Verfahren nach Anspruch 1 oder 2, dadurch **gekennzeichnet,** daß die Sicherungsroutine (SIR) für jede Servicenummer (sr) einen die automatische Einstellung der Anrufumleitung zum eingerichteten Agenten-Sammelanschluß bewirkenden Stapel von vermittlungstechnischen Anweisungen (amo) umfaßt - Anspruch 3.

4. Verfahren nach Anspruch 1, dadurch **gekennzeichnet,** daß bei einem Kommunikationssystem (KS), bei dem für einen für einen Anschluß eines Service-Kommunikationsendgerätes (SKE) vorgesehenen, einer Servicenummer (sr) zugeordneten Serviceendgeräteport (SKE-A) eine Anrufumleitung (AUL1) zu einem mit einem Anrufordner (AO) versehenen Service-Sammelanschluß (SA) eingestellt ist, nach einem Erkennen des Ausfalls der automatischen Anrufverteilung mit Hilfe der Sicherungsroutine (SIR) für die jeweilige einen Serviceendgeräteport (SKE-A) repräsentierende Servicenummer (sr) die Anrufumleitung (AUL1) zum Service-Sammelanschluß (SA) deaktiviert und die Anrufumleitung (AUL2) zum Agenten-Sammelanschluß (ASA) eingestellt wird.

5. Verfahren nach Anspruch 4, dadurch **gekennzeichnet,** daß nach einer Inbetriebnahme der automatischen Anrufverteilung mit Hilfe einer in dieser vorgesehenen Inbetriebnahmeroutine (IBR) die Anrufumleitung (AUL2) zum Agenten-Sammelanschluß (ASA) automatisch deaktiviert und die Anrufumleitung (AUL1) zum Service-Sammelanschluß (SA) aktiviert wird.

6. Verfahren nach Anspruch 4 oder 5, dadurch **gekennzeichnet,** daß die Sicherungsroutine (SIR) für jede Servicenummer (sr) einen die automatische Deaktivierung der Anrufumleitung (AUL1) zum Service-Sammelanschluß (SA) und einen die automatische Einstellung der Anrufumleitung (AU2) zum eingerichteten Agenten-Sammelanschluß bewirkenden Stapel von vermittlungstechnischen Anweisungen (amo) umfaßt - Anspruch 3.

7. Verfahren nach einem der vorhergehenden Ansprüche, dadurch **gekennzeichnet,** daß für Tag- und Nachtbetrieb unterschiedliche Sicherungsroutinen (SIR (T,N)) mit unterschiedlichen Stapeln von betriebstechnischen Anweisungen (amo) wirksam gesteuert werden, wobei für den Tag- und den Nachtbetrieb den Agenten-Sammelanschluß (ASA) unterschiedliche Gruppen (G) von Agenten-Kommunikationsendgeräten (AKE) zugeordnet sind.

8. Verfahren nach einem der vorhergehenden Ansprüche, dadurch **gekennzeichnet,** daß die automatischen Anrufverteilung in einem ACD-Server (ACD-S) realisiert ist, daß vom bzw. zum ACD-Server (ACD-S) über eine den Kommunikationsaustausch steuernde ACL-Schnittstelle (ACL) vermittlungstechnische Anweisungen (amo) bzw. vermittlungstechnische Ereignismeldungen (ei) zum bzw. vom Kommunikationssystem (KS) übermittelt werden, in dem zur Ausführung der vermittlungstechnischen Anweisungen (amo) und Generieren der vermittlungstechnischen Ereignismeldungen (ei) eine Programmstruktur (DGV) für ein über die ACL-Schnittstelle (ACL) beeinflußte Verbindungssteuerung vorgesehen ist.

9. Verfahren nach Anspruch 8, dadurch **gekennzeichnet,** daß der Ausfall der automatischen Anrufverteilung durch Störungen des über die ACL-Schnittstelle (ACL) gesteuerten Kommunikationsaustausches oder durch Störungs- und/oder Ausfallmeldungen(am) der Programmstruktur (DGV) zur Verbindungsteuerung oder der ACL-Schnittstelle (ACL) oder des ACD-Servers (ACD-S) oder den Ausfall der ACL-Schnittstelle (ACL) sowie des ACD-Servers (ACD-S) anzeigende Störungsmeldung des Betriebssysstems erkannt werden.
